# EUROPEAN PATENT APPLICATION

(11) **EP 4 671 022 A1**
(43) Date of publication of application: **31.12.2025**
(21) Application number: 25185272.9
(22) Date of filing: 25.06.2025
(51) Int. Cl.: B60K 6/387, B60K 6/48, B60K 6/52, B60W 10/02, B60W 10/06, B60W 10/08, B60W 20/10, B60W 20/16, B60W 20/40

(54) **MOTOR VEHICLE AND RELATED CONTROL METHOD**

(30) Priority: 26.06.2024 IT 202400014659
(71) Applicant: FERRARI S.p.A., 41100 Modena (IT)
(72) Inventor: MASUCCI, Salvatore, 41100 MODENA (IT); MALINVERNO, Fabio, 41100 MODENA (IT); KITSOPANIDIS, Ioannis, 41100 MODENA (IT)
(74) Representative: Studio Torta S.p.A.

(57) **Abstract**

A motor vehicle (1) comprising a frame (2), a first set of wheels (3a) and a second set of wheels (3b) rotatable relative to the frame (2) about respective rotational axes, an electric motor (4) operatively connected to the first set of wheels (3a), an internal combustion engine (5) operatively connectable to the second set of wheels (3b) and adapted to produce exhaust gas, an exhaust system (6) and an electronic control (10). The electronic control unit (10) is configured to command the electric motor (4) to be operatively connected to the first set of wheels (3a) and the internal combustion engine (5) to be operatively connected to the second set of wheels (3b), when a first physical quantity (T, t) complies with a control criterion. The electronic control unit (10) is also configured to command the electric motor (4) to be operatively connected to the first set of wheels (3a) and the internal combustion engine (5) to be operatively decoupled from the second set of wheels (3b), when the first physical quantity (T, t) does not comply with the control criterion.

## Description

### CROSS-REFERENCE TO RELATED APPLICATIONS

This patent application claims priority from Italian patent application no. 102024000014659 filed on June 26, 2024, the entire disclosure of which is incorporated herein by reference.

### TECHNICAL FIELD

The invention concerns a motor vehicle and a control method of a motor vehicle.

### BACKGROUND

Motor vehicles are known essentially comprising:
- a frame;
- a plurality of wheels rotatable relative to the frame about respective rotational axes;
- one or more internal combustion engines operatively connected to at least some of the wheels; and
- an exhaust system adapted to expel the exhaust gas produced by the internal combustion engines and to treat it, in order to reduce the polluting capacity and/or the toxicity thereof.

In a known manner, the exhaust system is configured to efficiently carry out the exhaust gas treatment operations around an optimal operating temperature (for example, near to 500°C).

At the starting of the internal combustion engine, the temperature of the exhaust system is generally lower than the optimal operating temperature; therefore, during said starting phase, the exhaust system abates the pollutants carried by the exhaust gas in an inefficient manner.

Operation of the exhaust system at full capacity is reached at the end of a certain time interval from starting of the internal combustion engine (in the order of a few dozen seconds), only once heating of the exhaust system has been completed.

More specifically, it has been observed that the polluting emissions produced in the time interval prior to establishment of the optimal operating regime of the exhaust system constitute a significant part of the polluting emissions produced overall by motor vehicles during their operation. Moreover, the greater the torque required by the user of the motor vehicle during heating of the exhaust system, the greater the polluting emissions.

FR3029972A1 describes a process for heating a catalyst mounted at the exhaust of a thermal engine (adapted to drive at least one drive wheel of a motor vehicle). The thermal engine is associated with a reversible electric machine which can operate as a generator or motor, participating in the driving torque of the vehicle. The process comprises a starting step of the vehicle in which a driving torque of the vehicle is required, a step of heating the catalyst to a minimum catalyst initiation ignition temperature and a pre-heating step of the catalyst, in which the driving torque of the vehicle is entirely produced by the electric machine operating in motor mode, the thermal engine being rotated, in the un-started state and without fuel injection, by the electric machine.

US2022176942A1 discloses a hybrid electric vehicle and a catalyst heating control method. The catalyst heating control method includes performing mode switching from a first mode in which only a drive motor is used as a driving source to a second mode in which an engine is driven in a state in which a drive shaft and the engine are disconnected from each other to start heating of a catalyst of the engine. When demand torque higher than a maximum output of the drive motor occurs before the catalyst heating is completed, the second mode is maintained until the demand torque is greater than the sum of the maximum output and a predetermined margin.

FR3140910A1 describes a process of heating of a three-way catalyst mounted at the exhaust of a thermal engine associated with a first electric machine capable of operating in a generator mode or in a motor mode. The first electric machine participates in the driving torque of the vehicle. The thermal engine is also associated with a second electric machine capable of operating at least in generator mode. The process comprises a vehicle starting step in which a vehicle driving torque is required and a step of heating the catalyst to a priming temperature, in which the vehicle driving torque is entirely produced by the first electric machine. The heating step comprises a step of post-combustion adjustment of the engine comprising a step of injecting fuel into at least one cylinder of the engine around the top dead centre of combustion, followed by a step of ignition around the exhaust bottom dead centre.

US2023271602A1 describes a hybrid electric vehicle which includes an engine, a motor arranged in a power transmission path between the engine and a drive wheel, and a clutch arranged in the power transmission path between the engine and the motor. The controller idles the engine in accordance with a target engine rotation speed and operates the motor in accordance with a target motor rotation speed when the clutch is in a disengagement state. When the clutch is in the disengagement state and the engine is idling, the target motor rotation speed is less than the target engine rotation speed. In the light of the above, the need is felt to reduce the polluting emissions produced by the internal combustion engines of motor vehicles during heating of the exhaust system, in particular in an efficient manner.

An object of the invention is to respond to the above need, preferably in a simple and inexpensive manner.

### DESCRIPTION OF THE INVENTION

The object is achieved by a motor vehicle as defined in claim 1. The object is further achieved by a control method of a motor vehicle as defined in claim 8.

The dependent claims define particular embodiments of the invention.

### BRIEF DESCRIPTION OF THE DRAWINGS

Below, an embodiment of the invention is described for a better understanding thereof by way of non-limiting example and with reference to the attached drawing, in which:

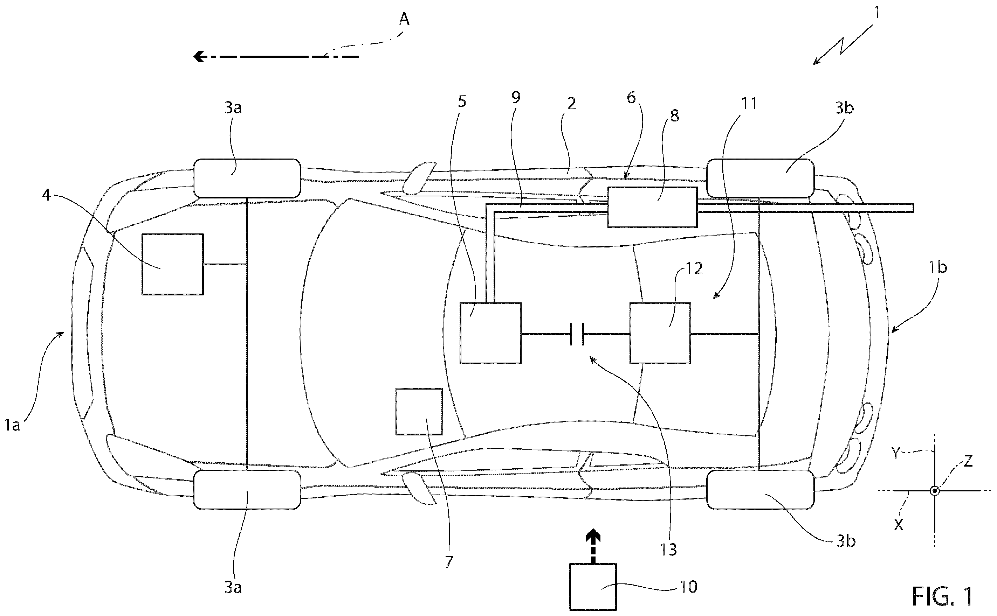

- figure 1 is a schematic view of a motor vehicle according to the present invention, with parts removed for clarity.

### EMBODIMENTS OF THE INVENTION

In figure 1, the reference number 1 is used to indicate, overall, a motor vehicle according to the present invention, which comprises:
- a frame 2; and
- a plurality of wheels 3a, 3b rotatable relative to the frame 2 about respective rotational axes.

It is possible to define a reference system integral with the motor vehicle 1 and comprising:
- a longitudinal extension axis X;
- an axis Z directed vertically to the ground on which the motor vehicle 1 rests; and
- an axis Y transverse to the axes X and Z.

In detail, the axes X, Y and Z are directed orthogonally to one another.

The motor vehicle 1 further comprises a front portion 1a and a rear portion 1b with reference to an advancement direction A of the motor vehicle 1. The front portion 1a and the rear portion 1b are arranged opposed to each other parallel to the axis X (figure 1).

In detail, the motor vehicle 1 comprises a pair of front wheels 3a arranged at the front portion 1a and a pair of rear wheels 3b arranged at the rear portion 1b.

The motor vehicle 1 further comprises (figure 1):
- an electric motor 4 operatively connected to the front wheels 3a; and
- an internal combustion engine 5 operatively connectable to the rear wheels 3b and adapted to generate exhaust gas as a combustion product.

The electric motor 4 is adapted to provide the front wheels 3a with mechanical power to drive the motor vehicle 1. Consequently, the motor vehicle 1 is a hybrid vehicle.

In detail, the mechanical power that can be supplied by the electric motor 4 is variable from a minimum value to a maximum value.

In the embodiment illustrated, furthermore, the electric motor 4 is constantly operatively connected to the front wheels 3a.

In other words, the electric motor 4 and the internal combustion engine 5 are operatively connected/connectable to wheels 3a, 3b different from each other. In further detail, preferably, the electric motor 4 and the internal combustion engine 5 are not operatively connected/connectable to a same wheel 3a, 3b.

In addition, the internal combustion engine 5 is mechanically separate and distinct from the electric motor 4 and from the front wheels 3a.

The motor vehicle 1 also comprises:
- an exhaust system 6 configured to expel and treat the exhaust gas produced by the internal combustion engine 5; and
- an electronic control unit 10.

The motor vehicle 1 also comprises a transmission 11 configured to transmit the power generated by the internal combustion engine 5 to the rear wheels 3b. In detail, the transmission 11 comprises:
- a gearbox 12; and
- a clutch 13, which is adapted to connect selectively and at least indirectly the internal combustion engine 5 to the rear wheels 3b.

In further detail, the clutch 13 is positionable in a closed position, in which it allows transmission of the power generated by the internal combustion engine 5 to the rear wheels 3b, or in an open position, in which it prevents transmission of the power generated by the internal combustion engine 5 to the rear wheels 3b. In other words, when the clutch 13 is in the open position, the internal combustion engine 5 is mechanically isolated from the rear wheels 3b.

The exhaust system 6 is adapted to reduce the polluting capacity and/or the toxicity of the exhaust gas coming out of the internal combustion engine 5. In the embodiment illustrated, the exhaust system 6 comprises:
- a catalytic converter 8; and
- at least a duct 9 that fluidly connects the internal combustion engine 5 to the catalytic converter 8.

However, the exhaust system 6 could comprise at least one out of: an exhaust manifold, a silencer, an exhaust pipe, a particulate filter, a supercharging system, a device for selective catalytic reduction (SCR).

Preferably, the exhaust system 6 is associated with an optimal operating temperature (for example, between 450°C and 550°C; for example equal to 500°C) or a preferential operating temperature range.

As illustrated schematically in figure 1, the motor vehicle 1 further comprises a command device 7 for controlling a physical quantity α associated with the speed of the motor vehicle **1.** Said command device communicates with the electronic control unit 10.

In detail, the command device 7 comprises a pedal (or a control of other type) operable by a user of the motor vehicle 1. In addition, the physical quantity α coincides or is correlated with the speed or the acceleration of the motor vehicle 1 relative to a fixed reference system (for example, integral with the ground) or with a torque to be imparted to the wheels 3a, 3b. In further detail, the pedal of the command device 7 is the accelerator pedal of the motor vehicle 1.

The pedal of the command device 7 is movable relative to the frame 2 between a rest position, which corresponds to a first value (for example, null) of the physical quantity α and a stroke end position, which corresponds to a second value of the physical quantity α greater than the first value.

In further detail, the electronic control unit 10 is configured to calculate and/or determine the value of the physical quantity α controlled by the user according to the position of the pedal of the command device 7 between the rest position and the stroke end position. Preferably, the electronic control unit 10 is configured to perform said calculation by means of a mathematical model.

Advantageously, the electronic control unit 10 is configured to command and/or control that:
- the electric motor 4 is operatively connected (specifically, continues to be operatively connected) to the front wheels 3a, and the internal combustion engine 5 is operatively connected to the rear wheels 3b, when a physical quantity T associated with the temperature of the exhaust gas complies with a control criterion;
- the electric motor 4 is operatively connected (specifically, continues to be operatively connected) to the front wheels 3a, and the internal combustion engine 5 is operatively decoupled from the rear wheels 3b, when the physical quantity T does not comply with the control criterion.

In detail, the electronic control unit 10 is configured to command - via appropriate actuators - the movement of the clutch 13 to the closed position when the physical quantity T complies with the control criterion and to command the movement of the clutch 13 to the open position when the physical quantity T does not comply with the control criterion.

In addition, the electronic control unit 10 is configured to maintain the clutch 13 in the closed position as long as the physical quantity T complies with the control criterion and to maintain the clutch 13 in the open position as long as the physical quantity T does not comply with the control criterion.

The physical quantity T is, in detail, the temperature and/or the enthalpy of the exhaust gas produced by the internal combustion engine 5. In further detail, the physical quantity T is detected and/or determined by means of a mathematical model at one or more sections of the duct 9.

The control criterion provides, for example, for the physical quantity T to exceed a threshold value Tθ. Preferably, the threshold value Tθ coincides with or is correlated with the optimal operating temperature or with the preferential operating temperature range of the system 6. Therefore, when the physical quantity T complies with the control criterion, the exhaust system 6 operates at the optimal operating temperature or within the preferential operating temperature range.

The electronic control unit 10 is further configured to set the internal combustion engine 5 in a predetermined operating regime when the physical quantity T does not comply with the control criterion. In detail, the electronic control unit 10 is configured to control at least one of the following parameters of the internal combustion engine 5:
- number of revolutions;
- ignition timing advance;
- position of the phase shifters; and
- one or more parameters associated with the injection mode and/or phase.

In particular, the parameters associated with the injection mode and/or phase are the angle of injection relative to the top dead centre and the number of injections per engine cycle.

Preferably, the electronic control unit 10 is configured to maintain constant or substantially constant the values of the parameters it controls during the predetermined operating regime.

Preferably, furthermore, the predetermined operating regime is defined by a pre-set combination of values of number of revolutions, ignition timing advance, position of the variators and parameters associated with the injection phase.

In further detail, the predetermined operating regime is such as to allow the internal combustion engine 5 to carry out the heating of the exhaust system 6 and in particular of the catalytic converter 8. This heating is also known as catalyst heating.

Preferably, furthermore, the electronic control unit 10 is configured to command the internal combustion engine 5 to be operatively connected to the rear wheels 3b also when the physical quantity T does not comply with the control criterion, when the physical quantity α exceeds a threshold value αθ.

In particular, the threshold value αθ is correlated with the maximum power value that can be supplied by the electric motor 4.

Below, the operation of the motor vehicle 1 is described starting from a condition in which the motor vehicle 1 and/or the internal combustion engine 5 and/or the exhaust system 6 have been inactive for a certain period of time and the temperature of the exhaust system 6 is lower than the optimal operating temperature or the preferential operating temperature range.

In use, when the motor vehicle 1 is switched on, the control unit 10 detects the quantity T at one or more sections of the duct 9 or calculates it based on detections carried out at one or more sections of the duct 9. At the same time, the user of the motor vehicle 1 controls the physical quantity α by means of the command device 7.

As long as the quantity T does not comply with the control criterion, the electronic control unit 10 maintains the internal combustion engine 5, which is on and emits exhaust gas, operatively decoupled from the rear wheels 3b, leaving the achievement of the value of the quantity α as commanded by the user to the electric motor 4.

In other words, the front wheels 3a are rotated about the respective rotational axes by the electric motor 4, while the rear wheels 3b do not receive torque from the internal combustion engine 5. In detail, in said condition, the electronic control unit 10 maintains the clutch 13 in the open position.

While the internal combustion engine 5 is operatively isolated from the rear wheels 3b, the electronic control unit 10 sets the internal combustion engine 5 to the predetermined operating regime. In this way, the internal combustion engine 5 is dedicated to heating the exhaust system 6.

Once the exhaust system 6 has reached the optimal operating temperature or the preferential operating temperature range and therefore the physical quantity T complies with the control criterion, the electronic control unit 10 operatively connects also the internal combustion engine 5 to the rear wheels 3b. Consequently, the energy to be supplied to the front wheels 3a and to the rear wheels 3b to reach the value of the quantity α commanded by the user is shared between the electric motor 4, which supplies torque to the front wheels 3a, and the internal combustion engine 5, which supplies torque to the rear wheels 3b. In detail, in said condition, the electronic control unit 10 moves the clutch 13 to the closed position.

Preferably, furthermore, in the situations in which the physical quantity T does not comply with the control criterion, but the value of the quantity α commanded by the user exceeds the threshold value αθ, the electronic control unit 10 commands the internal combustion engine 5 to be operatively coupled to the rear wheels 3b. In said condition, the electronic control unit 10 moves the internal combustion engine 5 from the predetermined operating regime.

From the above, the advantages according to the invention are evident.

In particular, since the internal combustion engine 5 is operatively decoupled from the rear wheels 3b when the physical quantity T does not comply with the control criterion, it is possible to reduce the polluting emissions produced by the internal combustion engine 5 during starting thereof and until the exhaust system 6 reaches the optimal operating temperature or a temperature close to it. In fact, while the internal combustion engine 5 is operatively decoupled from the rear wheels 3b, it can be used to appropriately heat the exhaust system 6. Specifically, while the internal combustion engine 5 is operatively decoupled from the rear wheels 3b, it can be made to operate in a specific and/or optimized operating regime to bring the temperature of the exhaust system 6 to operating conditions (namely, to carry out and complete the catalyst heating phase).

According to the configuration claimed, furthermore, the electric motor 4 and the internal combustion engine 5 act on different wheels 3a, 3b and are mechanically separate from each other. Said configuration is particularly efficient compared to the known configurations in which the electric motor and the internal combustion engine are operatively connected to the same wheels 3a or 3b. In fact, the configuration claimed allows distribution of the masses connected to the front axle and to the rear axle and allows the implementation of a four-wheel drive of the motor vehicle **1.**

Since the electronic control unit 10 is configured to command the internal combustion engine 5 to be operatively connected to the rear wheels 3b also when the physical quantity T does not comply with the control criterion, but when the physical quantity α exceeds the threshold value αθ, it is possible to guarantee that the speed, acceleration and/or the torque required by the user is reached by the motor vehicle 1 also during the starting phase of the internal combustion engine 5. In this way it is possible to ensure that the motor vehicle 1 generates sufficient power also in conditions in which the required power exceeds the maximum power that can be delivered solely by the electric motor 4.

Lastly it is clear that modifications and variations can be made to the motor vehicle 1 and to the method according to the invention which do not depart from the protective scope defined by the claims.

In particular, the motor vehicle 1 could comprise more than one electric motor 4 and/or more than one internal combustion engine 5.

The motor vehicle 1 could comprise a further clutch adapted to selectively connect the electric motor 4 to the front wheels 3a.

Alternatively to being operatively connected to the front wheels 3a, the electric motor 4 could be operatively connected to the rear wheels 3b and the internal combustion engine 5 could be operatively connected to the front wheels 3a.

Alternatively or additionally, the electronic control unit 10 could be configured to command:
- the electric motor 4 to be operatively connected to the front wheels 3a and the internal combustion engine 5 to be operatively connected to the rear wheels 3b when the time t that has elapsed from starting of the internal combustion engine 5 complies with a control criterion;
- the electric motor 4 to be operatively connected to the front wheels 3a and the internal combustion engine 5 to be operatively decoupled from the rear wheels 3b when the time t that has elapsed since starting of the internal combustion engine 5 does not comply with the control criterion.

In detail, the control criterion provides for the time t to exceed a threshold value.

In other words, the internal combustion engine 5 is operatively connected to the rear wheels 3b after a time interval has elapsed from ignition of the internal combustion engine 5; the internal combustion engine 5 is operatively decoupled from the rear wheels 3b during the time interval, namely before the time interval from ignition of the internal combustion engine 5 has elapsed.

In detail, the threshold value is predefined and stored in the electronic control unit 10.

According to said embodiment, the electronic control unit 10 is configured to set the internal combustion engine 5 in the predetermined operating regime when the time t does not comply with the control criterion.

According to said embodiment, furthermore, the electronic control unit 10 is configured to command the internal combustion engine 5 to be operatively connected to the rear wheels 3b when the time t does not comply with the control criterion and the physical quantity α exceeds the threshold value αθ.

Alternatively or additionally, the electronic control unit 10 could be configured to command:
- the electric motor 4 to be operatively connected to the rear wheels 3b and the internal combustion engine 5 to be operatively connected to the front wheels 3a when the time t that has elapsed since starting of the internal combustion engine 5 complies with the control criterion;
- the electric motor 4 to be operatively connected to the rear wheels 3b and the internal combustion engine 5 to be operatively decoupled from the front wheels 3a when the time t that has elapsed from starting of the internal combustion engine 5 does not comply with the control criterion.

## Claims

1. A motor vehicle (1) comprising:
- a frame (2);
- a first set of wheels (3a) and a second set of wheels (3b) rotatable relative to said frame (2) about respective rotational axes;
- at least one electric motor (4) operatively connected to said first set of wheels (3a);
- at least one internal combustion engine (5) selectively operatively connectable to said second set of wheels (3b) and adapted to produce, in use, exhaust gas;
- an exhaust system (6) configured to expel and treat said exhaust gas; and
- an electronic control unit (10);
**characterized in that** said electronic control unit (10) is configured to command:
- said electric motor (4) to be operatively connected to said first set of wheels (3a) and said internal combustion engine (5) to be operatively connected to said second set of wheels (3b) when a first physical quantity (T, t) complies, in use, with a control criterion;
- said electric motor (4) to be operatively connected to said first set of wheels (3a) and said internal combustion engine (5) to be operatively decoupled from said second set of wheels (3b) when said first physical quantity (T, t) does not comply, in use, with said control criterion.

2. The motor vehicle according to claim 1, comprising a front portion (1a) and a rear portion (3b) according to a travel direction (A) of said motor vehicle (1);
wherein said first set of wheels (3a) is arranged on the side of said front portion (1a) and said second set of wheels (3b) is arranged on the side of said rear portion (1b); or
wherein said first set of wheels (3a) is arranged on the side of said rear portion (1b) and said second set of wheels (3b) is arranged on the side of said front portion (1a).

3. The motor vehicle according to claim 1 or 2, wherein said first physical quantity (T) is associated with the temperature of said exhaust gas.

4. The motor vehicle according to claim 1 or 2, wherein said first physical quantity (t) is associated with the time passed since the start of said internal combustion engine (5);
said first physical quantity (t) complying, in use, with said control criterion when it exceeds a threshold value; said first physical quantity (t) not complying, in use, with said control criterion when it is below said threshold value.

5. The motor vehicle according to any one of the foregoing claims, wherein said electronic control unit (10) is further configured to set said internal combustion engine (5) in a predetermined operating regime, when said first physical quantity (T, t) does not comply with said control criterion.

6. The motor vehicle according to any one of the foregoing claims, comprising a command device (7) operable, in use, by a user to control a second physical quantity (α) associated with the speed of said motor vehicle (1); said command device (7) being operatively connected to said electronic control unit (10);
wherein said electronic control unit (10) is configured to control that said internal combustion engine (5) is operatively connected to said second set of wheels (3b), when said first physical quantity (T, t) does not comply with said control criterion and said second physical quantity (α) exceeds a threshold value (αθ).

7. The motor vehicle according to claim 3 or claim 5 or 6 when dependent on claim 3, wherein said exhaust system (6) comprises:
- a catalytic converter (8); and
- at least one duct (9), which fluidly connects said internal combustion engine (5) to said catalytic converter (8);
wherein said electronic control unit (10) is configured to control that said internal combustion engine (5) is operatively connected to said second set of wheels (3b) as a function of said first physical quantity (T) detected and/or determined in at least one point of said duct (9).

8. A method of controlling a motor vehicle (1); said motor vehicle (1) comprising:
- a frame (2);
- a first set of wheels (3a) and a second set of wheels (3b) rotatable relative to said frame (2) about respective rotational axes;
- at least one electric motor (4) operatively connected to said first set of wheels (3a);
- at least one internal combustion engine (5) selectively operatively connectable to said second set of wheels (3b) and adapted to produce, in use, exhaust gas; and
- an exhaust system (6) configured to expel and treat said exhaust gas;
said method **characterized by** comprising the steps of:
i) operatively connecting said electric motor (4) to said first set of wheels (3a) and said internal combustion engine (5) to said second set of wheels (3b), when a first physical quantity (T, t) complies with a control criterion;
ii) operatively connecting said electric motor (4) to said first set of wheels (3a) and operatively decoupling said internal combustion engine (5) from said second set of wheels (3b), when said first physical quantity (T, t) does not comply with said control criterion.

9. The method according to claim 8, wherein said first set of wheels (3a) is arranged on the side of a front portion (1a) of said motor vehicle (1) and said second set of wheels (3b) is arranged on the side of a rear portion (1b) of said motor vehicle (1); said front portion (1a) and said rear portion (1b) being defined relative to a direction of travel (A) of said motor vehicle (1); or
wherein said first set of wheels (3a) is arranged on the side of said rear portion (1b) and said second set of wheels (3b) is arranged on the side of said front portion (1a).

10. The method according to claim 8 or 9, wherein said first physical quantity (T) is associated with the temperature of said exhaust gas.

11. The method according to claim 8 or 9, wherein said first physical quantity (t) is associated with the time that has elapsed since the starting of said internal combustion engine (5);
said first physical quantity (t) complying with said control criterion when it exceeds a threshold value; said first physical quantity (t) not complying with said control criterion when it is below said threshold value.

12. The method according to any one of claims 8 to 11, comprising the further step iii) of setting said internal combustion engine (5) in a predetermined operating regime, when said first physical quantity (T, t) does not comply with said control criterion.

13. The method according to claim 12, wherein said internal combustion engine (5) warms an exhaust system (6) of said motor vehicle (1) during said step iii).

14. The method according to any one of claims 8 to 13, comprising the steps of:
iv) controlling a second physical quantity (α) associated with the speed of said motor vehicle (1);
v) operatively connecting said internal combustion engine (5) to said second set of wheels (3b), when said first physical quantity (T, t) does not comply with a control criterion and said second physical quantity (α) exceeds a threshold value (aθ).

15. The method according to claim 10 or any one of claims 12 to 14 when dependent on claim 10, wherein said first physical quantity (T) is detected and/or determined in at least one point of a duct (9) of said motor vehicle (1); said duct (9) fluidly connecting said internal combustion engine (5) to a catalytic converter (8) of said exhaust system (6).
